Europäisches Patentamt

European Patent Office

Office européen des brevets

(19)

(11) Numéro de publication: **0 103 257
B1**

(12) **FASCICULE DE BREVET EUROPEEN**

(45) Date de publication du fascicule du brevet: **24.02.88**

(51) Int. Cl.⁴: **G 10 K 11/16**

(21) Numéro de dépôt: **83108766.3**

(22) Date de dépôt: **06.09.83**

(54) **Procédé et dispositifs d'atténuation de bruits parasites.**

(30) Priorité: **09.09.82 FR 8215279**

(43) Date de publication de la demande:
**21.03.84 Bulletin 84/12**

(45) Mention de la délivrance du brevet:
**24.02.88 Bulletin 88/08**

(84) Etats contractants désignés:
**DE FR GB IT**

(56) Documents cités:
**EP-A-0 043 565
GB-A- 782 794
US-A-4 232 381**

(73) Titulaire: **SINTRA-ALCATEL Société Anonyme
dite:
26, rue Malakoff B.P. 245
F-92600 Asnieres Cedex (FR)**

(72) Inventeur: **Garçonnat, Michel
1, rue du Béarn
F-91130 Ris Orangis (FR)**
Inventeur: **Morgano, Philippe
7, rue Roland Lambert
F-91200 Athis Mons (FR)**

(74) Mandataire: **Desperrier, Jean-Louis et al
THOMSON-CSF SCPI 19, avenue de Messine
F-75008 Paris (FR)**

Courier Press, Leamington Spa, England.

EP 0 103 257 B1

# Description

La présente invention a pour objet un procédé d'atténuation de bruits parasites large bande et plus particulièrement un procédé destiné à améliorer le rapport signal/bruit obtenu à partir d'un capteur de signal utile perturbé par des bruits parasites.

L'atténuation de bruits parasitant des signaux utiles s'effectue classiquement à l'aide de filtres transversaux autoadaptatifs qui sont efficaces lorsque la source de bruit est unique et que le bruit est porté par une onde plane. Les composantes du bruit sont estimées à l'aide d'un filtre transversal et elles sont soustraites du signal fourni par le capteur perturbé. Le signal utile corrigé par soustraction est continuellement mis en oeuvre dans le filtre pour ajuster les divers coefficients de filtrage pour obtenir une atténuation optimale. Dans la pratique les signaux utiles reçus par un capteur, tel qu'un microphone ou un hydrophone, sont le plus souvent noyés dans des bruits contenant des raies ayant pour origine des sources différentes et les bruits sont captés après avoir parcouru des chemins acoustiques variés et inconnus.

Les résultats dans ces conditions sont donc bien inférieurs à ceux obtenus, lorsque les conditions évoquées plus haut sont respectées.

On connaît également par le brevet américain US—A—4 232 381 la possibilité d'atténuer les bruits parasites produits par le moteur d'un véhicule comportant un récepteur de signaux acoustiques. Ce dispositif comporte un capteur de rotation qui permet de produire des impulsions au profit d'un filtre synchrone qui sélectionne le fondamental et les harmoniques du bruit produit par le moteur de manière à créer un signal correcteur permettant de déparasiter le signal reçu par le récepteur de signaux acoustiques. Le signal électrique représentant le signal acoustique est issu d'un capteur unique qui permet d'obtenir directement le signal bruité et par filtrage, ou plutôt dans l'exemple décrit par échantillonnage, le signal de bruit tout seul. Ayant ainsi ces deux signaux on obtient le signal bruité, ou tout au moins on l'espère, par simple soustraction. Pour commander le filtre synchrone, on utilise un capteur qui n'est par un capteur de signal sonore, mais un capteur de synchronisation qui permet de commander ce filtre synchrone. Dans ces conditions ce dispositif ne permet d'atténuer que la fréquence fondamentale du bruit et ses harmoniques. Même si ces harmoniques sont répandus dans une large bande, on ne peut pas dire que le bruit ainsi atténué est à large bande puisqu'il se présente sous la forme d'un ensemble de raies spectrales entre lesquelles les autres bruits parasites éventuels ne seront pas atténués.

La présente invention a pour objet un procédé d'atténuation des bruits parasitant un signal acoustique utile selon la revendication 1, ayant une application et une efficacité améliorée par rapport à celle des dispositifs évoqués plus haut.

Les caractéristiques et avantages de l'invention sont précisés dans la description suivante en relation avec les figures ci-dessous répertoriées.

La figure 1 présente le schéma de base d'un dispositif d'atténuation selon l'invention.

La figure 2 présente le schéma de principe du dispositif d'atténuation selon l'invention dans sa forme numérique.

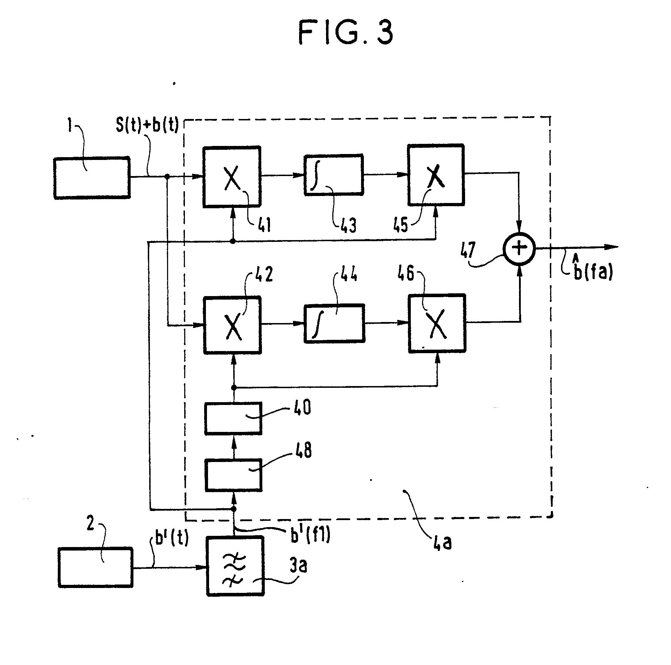

La figure 3 présente le schéma d'un module de corrélation pour dispositif selon l'invention.

Le dispositif d'atténuation de bruits parasites large bande selon l'invention et essentiellement destiné à améliorer le rapport signal/bruit obtenue pour un signal fourni par un capteur acoustique 1, tel qu'un microphone ou un hydrophone dans le cas où le signal utile capté par ce capteur est noyé dans des bruits parasites.

Il est en effet classique de pratiquement ne pas pouvoir éliminer les sources de bruit qui viennent perturber la réception d'un signal acoustique, tel est par exemple le cas lorsque l'on veut faire une écoute hydrophonique à partir d'un navire en marche et en particulier lorsque le signal à recueillir est de même nature que les bruits qui le perturbent.

En effet, si l'emploi d'un microphone ou d'un hydrophone directif et/ou à faible rayon de capture peut permettre de privilégier une source par rapport à d'autres sources situées hors de la direction privilégiée ou plus éloignées, il est de nombreux cas où les sources de bruits parasites peuvent être plus proches et plus puissantes que la source de signal utile et où les chemins acoustiques suivis par les ondes de bruit peuvent les amener dans la direction privilégiée du capteur.

Il est par contre généralement possible de trouver des zones où les bruits parasites sont présents alors que le signal utile n'est plus perçu, de manière à pouvoir y disposer un ou des capteurs 2 destinés à ne recevoir que ces bruits. En particulier, la puissance des sources de bruits parasites peut être telle que l'on puisse aisément capter ces bruits seuls ou encore la nature du capteur 2 peut être choisie tel qu'il soit insensible au signal utile contrairement au capteur 1.

Par exemple, dans l'élimination des bruits parasites qui perturbent une écoute hydrophonique à bord d'un navire et qui sont dus au navire lui-même, telles les ondes sonores créées par les vibrations occasionnées par les machines de bord, il est possible d'utiliser des accéléromètres placés sur les machines ou sur la coque, en tant que capteurs de bruit 2, au lieu d'hydrophones.

Bien entendu le nombre de capteurs 1 et 2 destinés tant à la réception du signal utile que des bruits peut varier en fonction des besoins, toutefois dans un but de simplification de l'exposé un seul capteur 1 de signal utile perturbé et un seul capteur 2 de bruits parasites sont représentés et ici pris en compte.

Selon l'invention on exploite le signal de bruit b'(t) généré par le capteur de bruits seuls 2 pour corriger le signal s(t) + b(t) généré par le capteur de signal utile perturbé 1, ce signal étant éventuellement amplifié jusqu'à un niveau convenable selon un processus classique.

2

Le signal b'(t) du capteur 2 dûment amplifié est appliqué à une pluralité de filtres à bande étroite 3a à 3n, dits de raie, qui sont individuellement centrés sur des fréquences différentes réparties dans le spectre correspondant au signal utile que l'on veut extraire.

Ainsi dans un exemple de réalisation où la bande utile est comprise entre 100 et 1000 Hz on utilise seize filtres de raie 3 réglables par pas de 1 Hz.

Chaque filtre de raie 3 fournit une valeur de référence b'(f) représentant la densité spectrale énergétique du bruit reçu par le capteur 2 pour la fréquence considérée tel b'(fa) pour le filtre de raie 3a centré sur la fréquence fa. Chaque filtre 3 est relié à une entrée d'un module de corrélation 4a à 4n qui lui est propre et qui a une seconde entrée reliée à la sortie du capteur 1 dont il reçoit donc le signal S(t) + b(t).

Les modules de corrélation 4 sont par exemple du type décrit dans le brevet français 2 215 005 de la Demanderesse. Chaque module de corrélation 4, tel 4a est alors composé:

— d'un circuit de normalisation 48 de type usuel assurant la normalisation en puissance du signal fourni par la sortie du filtre de raie associé 3,

— d'un déphaseur 40 relié à la sortie du circuit de normalisation 48 auquel il est associé et dont il reçoit un signal b'(fa), qu'il déphase d'une valeur $\pi/2$,

— de deux multiplicateurs d'entrée 41, 42 dont l'un 4 a ses entrées respectivement reliés au capteur 1 et à la sortie du filtre 3a, alors que l'autre a ses entrées respectivement reliées au capteur 1 et à la sortie de déphaseur 40,

— de deux intégrateurs 43 et 44 respectivement insérés en sortie des multiplicateurs d'entrée 41 et 42,

— de deux multiplicateurs de sortie 45 et 46, dont l'un 45 a ses entrées respectivement reliées en sortie de l'intégrateur 43 et du filtre 3a alors que l'autre 46 a ses entrées respectivement reliées en sortie du capteur 1 et en sortie du déphaseur 40,

— un additionneur 47 relié par ses entrées aux sorties du multiplicateurs de sortie 45 et 46 de manière à fournir un signal b̄(fa) qui correspond à la correction à apporter au signal S(t) + b(t) pour éliminer la composante du bruit pour la fréquence fa sur laquelle est entrée le filtre de raie 3a considéré.

L'ensemble 8 constituant le dispositif d'atténuation selon l'invention qui comprend donc les filtres 3, les modules de corrélation 4 comporte de plus un additionneur 5 aux entrées duquel sont reliées les modules de corrélation 4 de manière à additionner en un signal correcteur les signaux de correction b̄(fa), b̄(fb), . . ., b̄(fn) obtenus de ces modules pour reconstituer synthétiquement les bruits parasites perturbant le signal utile.

Un circuit soustracteur 6 alimenté d'une part par le capteur 1 d'autre part par l'additionneur 5 permet de produire un signal électrique image du signal acoustique utile déparasité en soustrayant le signal correcteur du signal S(t) + b(t) fourni par le capteur 1.

Bien entendu dans la pratique le nombre de filtres de raie 3 est nécessairement limité tant que l'on n'utilise pas une conversion des signaux sous forme numérique et ce sont les possibilités de réglage des filtres qui permettent de sélectionner les raies destinées à faire l'objet de correction, puisque dans le cas le plus général où les bruits parasites ne sont pas du type bruit blanc, seule l'énergie de certaines raies est à prendre en compte, les autres étant soient négligeables soient inexistantes.

Un dispositif d'atténuation appliquant le procédé selon l'invention peut avantageusement être mis en oeuvre après conversion des signaux produits par les capteurs d'une forme analogique en une forme numérique, en profitant des avantages apportés par les transformations de Fourier et plus particulièrement les transformations de Fourier rapides (FFT).

En effet, il est alors possible d'obtenir l'équivalent d'un nombre élevé de filtres de raie répartie dans la bande utile, par exemple l'équivalent de mille filtres de raie à l'aide d'une transformée de mille points, ce qui dans l'exemple numérique proposé plus haut permet de corriger l'ensemble des fréquences entières de la bande utile.

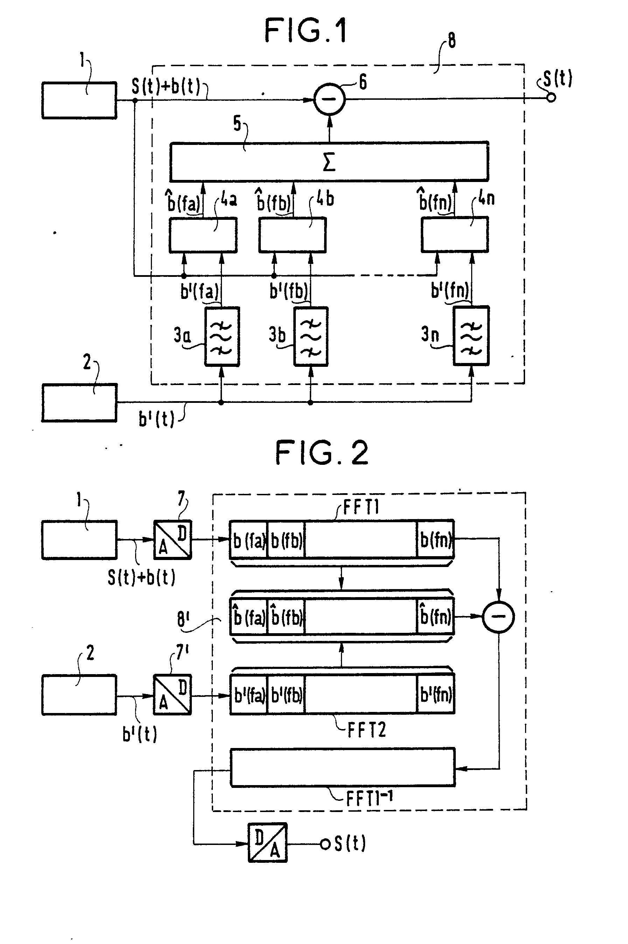

Ainsi que le montre la figure 2 chaque capteur 1 ou 2 est relié à un convertisseur analogique/ numérique 7 approprié et chaque convertisseur fournit les résultats de ses conversions à un ensemble 8' constitué par un calculateur apte à calculer une double transformée de Fourier (FFT1, FFT2) à partir des signaux reçus de chacun des convertisseurs pour en déduire un signal faisant la somme $\varepsilon$ des corrections corrélées effectuées pour chaque raie ou point de transformée.

La transformée inverse $FFT^{-1}$ du résultat de la soustraction, transformée FFT1 moins somme $\varepsilon$, permet alors de reconstituer le signal utile sous forme numérique et en cas de besoin le rétablir sous forme analogique via un convertisseur numérique/analogique.

Bien entendu les possibilités de traitement offertes par l'emploi de transformées de Fourier rapide permettent également de combiner plus aisément divers capteurs 1 ou 2 si le besoin s'en fait sentir.

**Revendications**

1. Procédé d'atténuation des bruits large bande parasitant un signal acoustique utile dans lequel on reçoit le signal acoustique parasité par les bruits à l'aide d'au moins un premier capteur (1) delivrant un premier signal électrique et on soustrait à ce premier signal électrique un deuxième signal électrique filtré représentant le bruit parasite pour obtenir un troisième signal électrique représentant le signal acoustique utile parasité par des bruits dont l'amplitude est inférieure à celle des bruits parasites initiaux, caractérisé en ce que l'on reçoit lesdits bruits initiaux à l'aide d'au moins un deuxième capteur (2) distinct du premier et délivrant un quatrième signal électrique ne représentant que ces bruits initiaux, que l'on filtre ce quatrième signal électrique par un ensemble de filtres passe-bande (3) dont les fréquences centrales sont réparties dans la bande des bruits initiaux, que l'on effectue une corrélation complexe (4) de chacun des signaux de sortie de ces filtres avec le premier signal électrique, et que l'on additionne ensemble (5) les signaux représentant ces corrélations pour obtenir le deuxième signal électrique.

2. Procédé selon la revendication 1, caractérisé en ce que l'on numérise (7, 7') les premier et quatrième signaux électriques, que l'on effectue sur ces signaux numérisés une transformation de Fourier rapide (FFT1, FFT2), la transformation de Fourier du quatrième signal jouant le rôle du filtrage en analogique, que l'on effectue une corrélation complexe (8') des signaux obtenus par ces transformations de Fourier, que l'on soustrait du signal représentant la transformation de Fourier du premier signal le signal représentant cette corrélation, que l'on effectue une transformation de Fourier Rapide Inverse (FFT-1) sur le signal résultant de cette soustraction, et que l'on convertit en analogique le signal résultant de cette transformation de Fourier inverse pour obtenir le troisième signal électrique.

**Patentansprüche**

1. Verfahren zur Dämpfung breitbandiger Störsignale, die einem akustischen Nutzsignal überlagert sind, bei welchem das mit Störsignalen überlagerte akustische Signal durch wenigstens einen Meßaufnehmer (1) empfangen wird, der ein erstes elektrisches Signal abgibt, und von diesem ersten elektrischen Signal ein zweites, gefiltertes elektrisches Signal subtrahiert wird, welches das Störsignal darstellt, um ein drittes elektrisches Signal zu erhalten, welches das akustische Nutzsignal darstellt, das von Störsignalen überlagert wird und dessen Amplitude kleiner als die der anfänglichen Störsignale ist, dadurch gekennzeichnet, daß die genannten anfänglichen Störsignale mittels wenigstens eines zweiten Meßaufnehmers (2) empfangen werden, der verschieden von dem ersten ist und ein viertes elektrisches Signal abgibt, welches nur diese Anfangsstörsignale darstellt, und daß dieses vierte elektrische Signal durch eine Gruppe von Bandpaßfiltern (3) gefiltert wird, deren Mittenfrequenzen im Bereich der anfänglichen Störsignale verteilt liegen, daß eine komplexe Korrelation (4) jedes der Ausgangssignale dieser Filter mit dem ersten elektrischen Signal vorgenommen wird und daß die Signale, welche diese Korrelationen darstellen, aufsummiert werden (5), um das zweite elektrische Signal zu erhalten.

2. Verfahren nach Anspruch 1, dadurch gekennzeichnet, daß das erste und das vierte elektrische Signal digitalisiert werden (7, 7'), daß diese digitalisierten Signale einer schnellen Fouriertransformation (FFT1, FFT2) unterzogen werden, wobei die Fouriertransformation des vierten Signals die Funktion einer analogen Filterung erfüllt, daß eine komplexe Korrelation (8') der durch diese Fouriertransformationen erhaltenen Signale vorgenommen wird und daß von dem Signal, welches die Fouriertransformation des ersten Signals darstellt, das Signal subtrahiert wird, welches diese Korrelation darstellt, daß eine inverse schnelle Fouriertransformation (FFT-1) auf das durch diese Subtraktion entstehende Signal angewendet wird und daß das aus dieser inversen Fouriertransformation entstehende Signal in Analogform umgesetzt wird, um das dritte elektrische Signal zu erhalten.

**Claims**

1. Method of attenuating broadband noise disturbing a useful acoustic signal wherein the acoustic signal disturbed by the noise is received by means of at least a first probe (1) supplying a first electric signal and a second electric signal is subtracted from this first electric signal, the second electric signal being filtered and representing the parasitic noise, to obtain a third electric signal representing the useful acoustic signal disturbed by the noise and the amplitude of which is lower than that of the initial parasitic noise, characterized in that said initial noise is received by means of at least a second probe (2) different from the first and supplying a fourth electric signal representing this initial noise only, that this fourth electric signal is filtered by means of a set of pass-band filters (3) the central frequencies of which are distributed in the band of the initial noise, that a complex correlation (4) of each of the output signals of these filters with the first electric signal is performed and that the signals representing these correlations are added together (5) to obtain said second electric signal.

2. Method according to claim 1, characterized in that the first and fourth electric signals (7, 7') are digitalized, that these digitalized signals are subjected to a fast Fourier transformation (FFT1, FFT2), the Fourier transformation of the fourth signal having the function of an analog filtering, that a complex correlation (8') of the signals obtained by these Fourier transformations is performed, that the signal representing this correlation is subtracted from the signal representing the Fourier transformation of the first signal, and in that an inverse fast Fourier transformation (FFT-1) is performed with the signal resulting from this subtraction, and that the signal resulting from this inverse Fourier transformation is converted in analog form to obtain the third electric signal.

# FIG.1

# FIG.2

# FIG. 3